# FASCICULE DE BREVET EUROPEEN

(11) **EP 1 947 924 B1**
(45) Date de publication et mention de la délivrance du brevet: **10.05.2017**
(21) Numéro de dépôt: 06851228.4
(22) Date de dépôt: 02.10.2006
(51) Int. Cl.: A01D 78/10, A01D 75/20

(54) **MACHINE DE FENAISON AVEC DES MOYENS DE PROTECTION PERFECTIONNÉS**
HEUERNTEMASCHINE MIT VERBESSERTEN SCHUTZEINRICHTUNGEN
HAYING MACHINE COMPRISING IMPROVED PROTECTION MEANS

(30) Priorité: 05.10.2005 FR 0552997
(43) Date de publication de la demande: 30.07.2008
(73) Titulaire: KUHN S.A., 67706 Saverne Cedex (FR)
(72) Inventeur: QUIRIN, Michel, 67310 Allenwiller (FR)
(74) Mandataire: Esch, Esther Evelyne
(86) Numéro de dépôt international: PCT/FR2006/050983
(87) Numéro de publication internationale: WO 2007/141399

(56) Documents cités:
- EP-A- 0 772 968
- EP-A- 1 495 666
- DE-A1- 1 482 104
- DE-A1- 3 739 114

## Description

La présente invention se rapporte à une machine de fenaison comportant un bâti constitué par une structure longitudinale plus ou moins centrale et destinée à être reliée à un tracteur et une structure transversale qui est munie de plusieurs rotors pour déplacer des végétaux sur le sol et à l'avant desquels sont disposés des moyens de protection, laquelle structure transversale comporte des parties latérales déployables dans une position de travail et repliables dans une position de transport.

Sur les machines connues de ce type, les moyens de protection sont généralement constitués par des barres rigides qui sont reliées à la structure transversale et qui se situent légèrement en avant des rotors. Lors du repliage des parties latérales de cette structure dans la position de transport, lesdites barres se replient avec elles. Dans le cas de machines de grande largeur, ces barres peuvent constituer des obstacles empêchant un important rapprochement vers le milieu de la machine desdites parties latérales.

Pour remédier à cela, il a déjà été proposé, sur des machines avec six rotors avec repliage vers le haut, de réaliser les barres de protection en plusieurs segments dont certains sont articulés sur les structures latérales au moyen d'axes. Ces segments articulés sont déplacés autour de leurs axes à l'aide de tringles lors du repliage afin de dégager de la place pour les rotors. De telles machines sont décrites dans les documents FR 2 612 362 et FR 2 661 798.

Un tel agencement n'est pas utilisable sur des machines de grande largeur qui possèdent plus de six rotors, en raison de la complexité des modes de repliage de telles machines et de l'ampleur des moyens qu'il y aurait lieu de mettre en oeuvre sur celles-ci.

Le document DE 1 482 104 se rapporte à des faneuses avec plusieurs rotors. Ces faneuses sont équipées de dispositifs de protection constitués par des supports rigides qui se situent aux extrémités et entre lesquels sont disposés des organes de protection en forme de cordes. Ces organes de protection sont flexibles et peuvent ainsi pendre entre les deux supports rigides correspondants dans la position de transport.

La présente invention a pour but de proposer une machine telle que revendiquée dans la revendication 1 avec des moyens de protection simples et faciles à mettre en oeuvre.

A cet effet, une importante caractéristique consiste en ce que les moyens de protection à l'avant des rotors de chaque partie latérale consistent en au moins une portion souple qui est escamotable automatiquement par enroulement ou glissement lors de la mise en position de transport de manière à ce qu'elle occupe un espace considérablement réduit dans cette position. Chaque portion souple peut s'escamoter par exemple par enroulement sur une bobine ou par glissement dans ou le long de la structure longitudinale. Cette opération d'escamotage s'effectue avantageusement sous l'action d'un ressort. Durant cet escamotage la configuration des portions souples se modifie automatiquement d'une manière considérable. De ce fait, elles ne gênent pas les déplacements des rotors vers la position de transport. En sus, ces portions souples ne nécessitent pas d'articulation ni de tringle de commande et peuvent facilement s'adapter à tous les modes de repliage des parties latérales.

Lesdites portions souples sont entraînées automatiquement par les parties latérales de la structure transversale lors de leur déploiement pour la mise en position de travail. Elles sont alors tendues, ce qui leur permet d'assurer la fonction de protection.

D'autres caractéristiques et avantages de l'invention ressortiront de la description qui va suivre et qui se réfère aux dessins annexés qui représentent, à titre d'exemples non limitatifs, quelques formes de réalisation de machines selon l'invention.

Dans ces dessins :
- la figure 1 représente un premier exemple de réalisation d'une machine selon l'invention en position de travail,
- la figure 2 représente la machine selon le premier exemple de réalisation en position de transport,
- la figure 3 représente un deuxième exemple de réalisation d'une machine selon l'invention en position de travail,
- la figure 4 représente la machine selon le deuxième exemple de réalisation en position de transport.

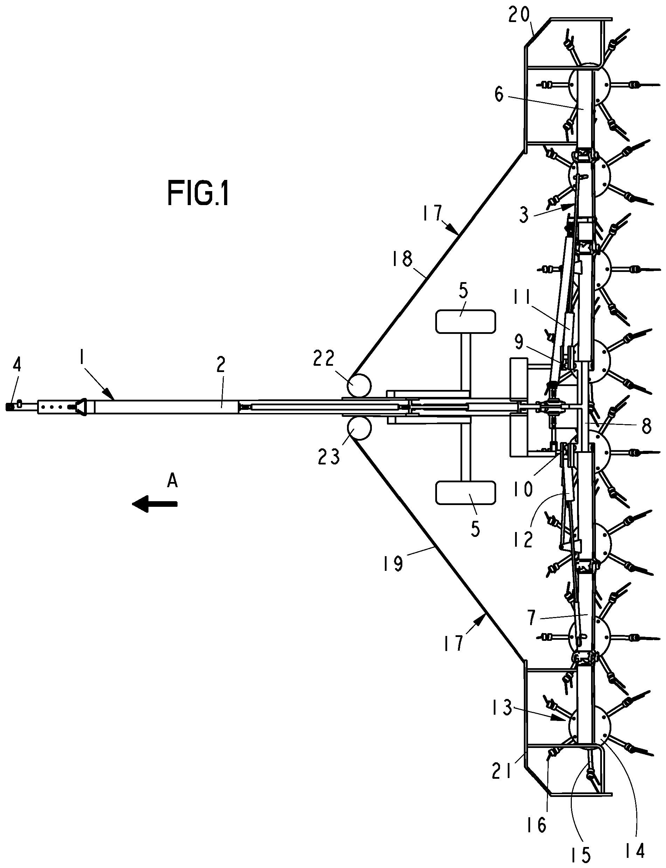

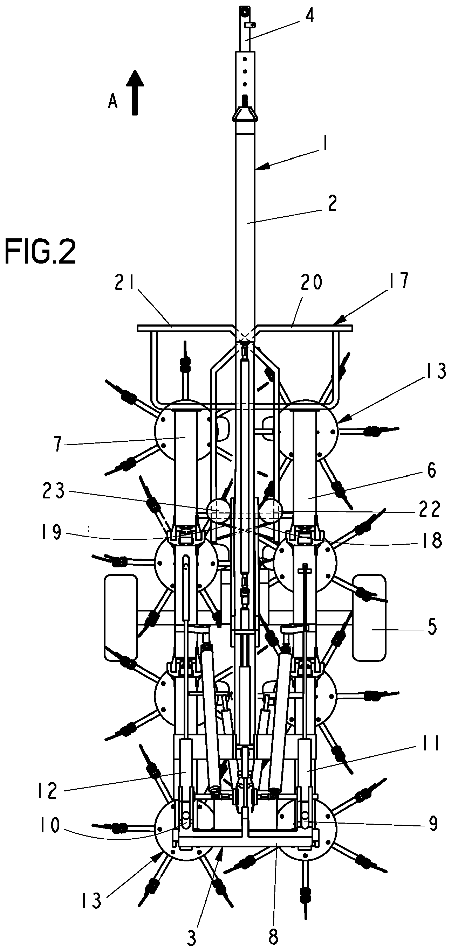

Telle qu'elle est représentée sur les figures 1 et 2, la machine selon l'invention est une faneuse comportant un bâti (1) constitué essentiellement par une structure longitudinale (2) plus ou moins centrale et une structure transversale (3). La structure longitudinale (2) comporte à son extrémité avant une tête d'attelage (4) destinée à être reliée à un tracteur servant à animer la machine et à la déplacer dans une direction d'avancement (A). Elle comporte en sus des roues de déplacement (5) et elle porte à son extrémité arrière la structure transversale (3).

La structure transversale (3) comporte deux parties latérales (6 et 7) articulées sur une partie centrale (8) au moyen d'axes sensiblement verticaux (9 et 10). Elles sont déplaçables autour de ces axes (9 et 10) au moyen de vérins hydrauliques (11 et 12). Ceux-ci permettent ainsi de déployer les deux parties (6 et 7) dans une position de travail (figure 1) et de les replier vers l'avant dans une position de transport (figure 2) dans laquelle la largeur de la machine est considérablement réduite. Chaque partie latérale (6, 7) porte quatre rotors (13) destinés à faner des végétaux coupés, soit huit au total pour la machine. Ce nombre n'est donné qu'à titre d'exemple et peut varier en fonction de la largeur de travail recherchée. Chaque partie latérale (6, 7) pourrait aussi être équipée de rotors pour l'andainage de végétaux.

Chaque rotor de fanage (13) possède un moyeu (14) qui est monté rotatif sur un axe portant à son extrémité inférieure une roue d'appui au sol. Ledit moyeu (14) est muni de bras (15) qui s'étendent radialement et qui portent des fourches de travail (16).

La machine comporte des moyens de protection (17) empêchant l'arrivée d'obstacles jusqu'aux rotors de fanage (13). Ces moyens (17) se situent à une certaine distance du sol, à l'avant des rotors (13). Ils sont constitués à l'avant de chaque partie latérale (6, 7) par au moins une portion souple (18, 19) qui est escamotable automatiquement de sa position à l'avant des rotors (13) dans une autre configuration lors du repliage des parties latérales (6 et 7) en position de transport. Chaque portion souple (18, 19) est constituée par une bande en matière naturelle ou en matière synthétique résistante à la traction. Sur chaque côté de la machine, la portion souple (18, 19) s'étend depuis la structure longitudinale (2) jusqu'à un support rigide (20, 21) qui est fixé à l'extrémité extérieure de la partie latérale (6, 7) correspondante. La taille de ce support rigide (20, 21) peut varier en fonction des besoins. Il peut lui-même assurer une fonction de protection au niveau du rotor (13) situé à l'extrémité extérieure.

Dans l'exemple de réalisation des figures 1 et 2, chacune des portions souples (18 ; 19) est liée à une bobine enrouleuse (22, 23) munie d'un ressort d'enroulement automatique. Chaque bobine (22, 23) est fixée sur une des flancs latéraux de la structure longitudinale (2). Elle pourrait cependant aussi être fixée au support rigide (20, 21) correspondant.

Lesdites portions souples (18, 19) s'escamotent automatiquement par enroulement sur la bobine (22, 23) correspondante lors du repliage des parties latérales (6, 7) pour la mise en position de transport. Dans cette nouvelle configuration, les portions souples (18, 19) sont presque totalement enroulées sur leurs bobines (22, 23) et occupent un espace considérablement réduit, dans le voisinage de la structure longitudinale (2). Les rotors (13) sont ainsi dégagés et sont complètement libres dans leurs déplacements. Ces portions souples (18, 19) se déroulent aussi automatiquement lors du déploiement des parties latérales (6 et 7) en position de travail en raison de la traction exercée par ces dernières. Dans cette position des parties latérales (6 et 7), les portions souples (18 et 19) sont totalement déroulées des bobines (22 et 23). Elles sont en sus tendues et contribuent à maintenir lesdites parties latérales (6 et 7) dans une position sensiblement perpendiculaire à la direction d'avancement (A).

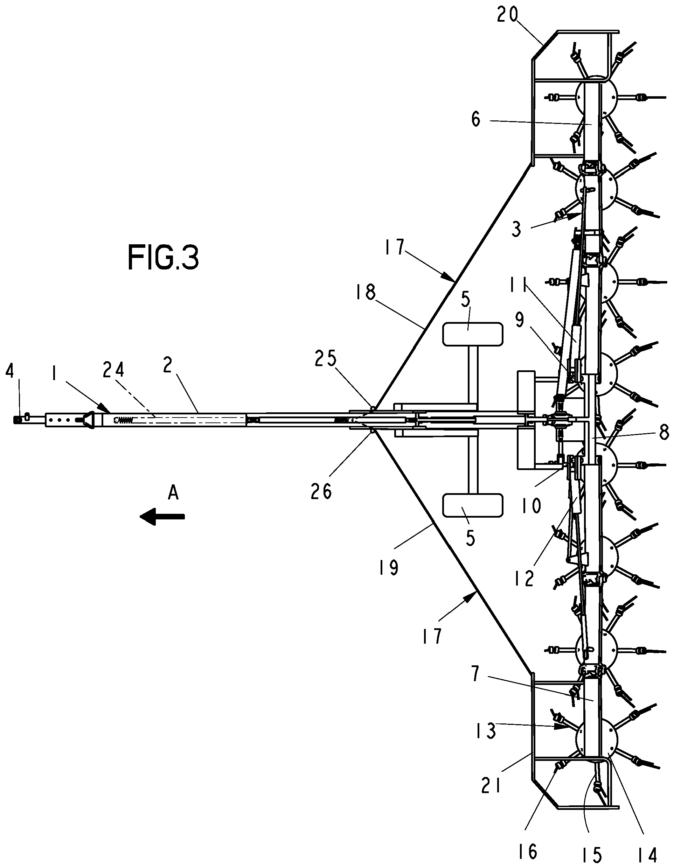

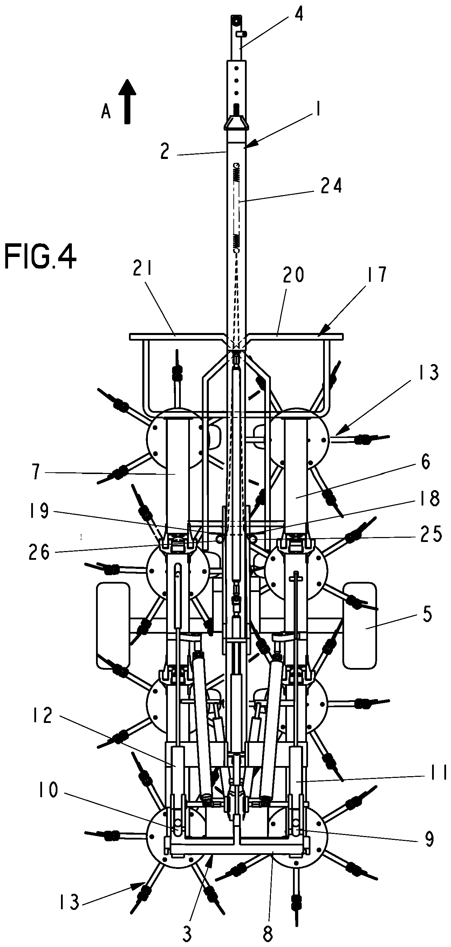

Dans l'exemple de réalisation des figures 3 et 4, chacune des portions souples (18 et 19) est liée à un ressort de traction (24) qui se situe dans la structure longitudinale (2). Cette dernière comporte sur ses flancs des ouvertures latérales par lesquelles les portions souples (18 et 19) peuvent passer dans son volume intérieur. Lesdits flancs portent en sus des rouleaux (25 et 26) qui assurent le guidage des portions souples (18 et 19) lors de leurs déplacements.

Au repliage des parties latérales (6 et 7) dans la position de transport, les portions souples (18 et 19) s'escamotent par glissement dans la structure longitudinale (2) sous l'effet du ressort de traction (24). Elles peuvent en sus être guidées de manière à se replier sur elles-mêmes pour occuper moins de place. A l'inverse, lesdites portions souples (18 et 19) sont tirées vers l'extérieur, à l'encontre de la force du ressort (24), par les parties latérales (6 et 7) quand elles sont déployées en position de travail.

Selon une variante de réalisation, les portions souples (18 et 19) peuvent être reliées à des ressorts de traction situés sur les côtés extérieurs de la structure longitudinale (2). Dans ce cas, elles s'escamotent le long des flancs latéraux de cette dernière pour le transport. Cette opération peut s'effectuer par glissement ou par repliement à l'aide de moyens de guidage tels que des rails.

Au travail, la machine est déplacée dans le sens d'avancement (A), les deux parties latérales (6 et 7) déployées perpendiculairement audit sens. Les rotors (13) sont alors entraînés en rotation de sorte que leurs fourches (16) ramassent, sur les parties avant de leurs trajectoires, les produits couchés sur le sol et les étalent à nouveau vers l'arrière tout en provoquant leur retournement afin d'accélérer leur séchage.

Les portions souples (18 et 19) des moyens de protection sont alors tendues à l'avant des rotors (13) et, avec les supports rigides (20 et 21), empêchent la rencontre entre d'éventuels obstacles et lesdits rotors (13).

Pour le transport, les parties latérales (6 et 7) sont repliées vers l'avant afin de réduire la largeur de la machine pour la rendre déplaçable sur les chemins et les routes. Simultanément, les portions souples (18 et 19) des moyens de protection (17) s'escamotent automatiquement dans les enrouleurs (22 et 23) ou dans ou le long de la structure longitudinale (2) afin de ne pas gêner ledit repliage des parties latérales (6 et 7) avec leurs rotors (13).

Ces moyens de protection (17) avec des portions souples (18 et 19) escamotables automatiquement selon la présente invention peuvent aussi équiper des machines avec d'autres modes de repliage des rotors (13). Sur de telles machines, des rotors (13) peuvent être rabattus sur des rotors (13) voisins avant leur repliage vers l'avant ou bien les rotors (13) peuvent être déplacés en totalité vers le haut pour le transport.

Il est bien évident que l'invention n'est pas limitée aux modes de réalisation décrits ci-dessus et représentés sur les dessins annexés. Des modifications restent possibles notamment en ce qui concerne la constitution ou le nombre des divers éléments, sans pour autant sortir du domaine de protection, tel que défini par les revendications.

## Revendications

1. Machine de fenaison comportant un bâti (1) constitué par une structure longitudinale (2) plus ou moins centrale et destinée à être reliée à un tracteur et par une structure transversale (3) qui est munie de plusieurs rotors (13) pour déplacer des végétaux sur le sol et à l'avant desquels sont disposés des moyens de protection (17) constitués par au moins une portion souple (18, 19), laquelle structure transversale (3) comporte des parties latérales (6 et 7) déployables dans une position de travail et repliables dans une position de transport, ***caractérisée par le fait* que** la portion souple (18, 19) qui constitue, à l'avant de chaque partie latérale (6, 7), les moyens de protection (17), est escamotable automatiquement par enroulement ou par glissement lors de la mise en position de transport des parties latérales (6 et 7) de la structure transversale (3).

2. Machine selon la revendication 1, ***caractérisée par le fait* que** chaque portion souple (18, 19) des moyens de protection (17) est constituée par une bande.

3. Machine selon la revendication 1 ou 2, ***caractérisée par le fait* que** chaque portion souple (18, 19) s'étend de la structure longitudinale (2) du bâti (1) jusqu'à un support rigide (20, 21) situé près de l'extrémité extérieure de la partie latérale (6, 7) correspondante de la structure transversale (3).

4. Machine selon l'une quelconque des revendications 1 à 3, ***caractérisée par le fait* que** chaque portion souple (18, 19) est liée à une bobine enrouleuse (22, 23) munie d'un ressort d'enroulement automatique sur laquelle ladite portion souple (18, 19) est enroulée dans la position de transport.

5. Machine selon la revendication 4, ***caractérisée par le fait* que** chaque bobine enrouleuse (22, 23) est fixée à la structure longitudinale (2).

6. Machine selon la revendication 4 ou 5, ***caractérisée par le fait* que** chaque portion souple (18, 19) est totalement déroulée de la bobine enrouleuse (22, 23) correspondante dans la position de travail des parties latérales (6 et 7) de la structure transversale (3) de manière à être tendue.

7. Machine selon l'une quelconque des revendications 1 à 3, ***caractérisée par le fait* que** chaque portion souple (18, 19) est liée à un ressort de traction (24) qui la tend en position de travail et qui l'escamote en position de transport.

8. Machine selon la revendication 7, ***caractérisée par le fait* que** le ressort de traction (24) se situe dans la structure longitudinale (2) du bâti (1).

9. Machine selon la revendication 7 ou 8, ***caractérisée par le fait* que** chaque portion souple (18, 19) est guidée sur au moins un rouleau (25, 26) fixé sur un flanc de la structure longitudinale (2).

10. Machine selon la revendication 8, ***caractérisée par le fait* que** la structure longitudinale (2) comporte des ouvertures latérales sur ses flancs latéraux pour le passage des portions souples (18 et 19) dans l'espace intérieur de ladite structure longitudinale (2).

## Patentansprüche

1. Heuwerbungsmaschine mit einem Gestell (1), das von einem mehr oder weniger zentralen Längswerk (2) gebildet wird, welches dazu bestimmt ist, mit einem Traktor verbunden zu werden, und von einem Querwerk (3), das mit mehreren Rotoren (13) versehen ist, um auf dem Boden liegende Pflanzen zu bewegen, und vor denen Schutzmittel (17) angeordnet sind, die von mindestens einem flexiblen Abschnitt (18, 19) gebildet sind, wobei das Querwerk (3) Seitenteile (6 und 7) umfasst, die in eine Arbeitsstellung auseinander geklappt und in eine Transportstellung zusammengeklappt werden können, ***dadurch gekennzeichnet, dass*** der flexible Teil (18, 19), der vor jedem Seitenteil (6, 7) die Schutzmittel (17) bildet, durch Aufwickeln oder durch Gleiten, beim Einnehmen der Transportstellung der Seitenteile (6 und 7) des Querwerks (3) automatisch einziehbar ist.

2. Maschine nach Anspruch 1, ***dadurch gekennzeichnet, dass*** jeder flexible Abschnitt (18, 19) der Schutzmittel (17) von einem Band gebildet wird.

3. Maschine nach Anspruch 1 oder 2, ***dadurch gekennzeichnet, dass*** sich jeder flexible Abschnitt (18, 19) ausgehend vom Längswerk (2) des Gestells (1) bis zu einer starren Auflage (20, 21) erstreckt, die sich nahe dem äußeren Ende des entsprechenden Seitenteils (6, 7) des Querwerks (3) befindet.

4. Maschine nach irgendeinem der Ansprüche 1 bis 3, ***dadurch gekennzeichnet, dass*** jeder flexible Abschnitt (18, 19) mit einer Aufwickelspule (22, 23) verbunden ist, die mit einer automatischen Wickelfeder versehen ist, auf welche der flexible Abschnitt (18, 19) in Transportstellung aufgewickelt wird.

5. Maschine nach Anspruch 4, ***dadurch gekennzeichnet, dass*** jede Aufwickelspule (22, 23) am Längswerk (2) fixiert ist.

6. Maschine nach Anspruch 4 oder 5, ***dadurch gekennzeichnet, dass*** jeder flexible Abschnitt (18, 19) in Arbeitsstellung der Seitenteile (6 und 7) des Querwerks (3) von der entsprechenden Aufwickelspule (22, 23) vollständig abgewickelt wird, um gespannt zu werden.

7. Maschine nach irgendeinem der Ansprüche 1 bis 3, ***dadurch gekennzeichnet*, *dass*** jeder flexible Abschnitt (18, 19) mit einer Zugfeder (24) verbunden ist, die ihn in Arbeitsstellung spannt und die ihn in die Transportstellung einzieht.

8. Maschine nach Anspruch 7, ***dadurch gekennzeichnet*, *dass*** sich die Zugfeder (24) im Längswerk (2) des Gestells (1) befindet.

9. Maschine nach Anspruch 7 oder 8, ***dadurch gekennzeichnet, dass*** jeder flexible Abschnitt (18, 19) auf mindestens einer Walze (25, 26) geführt wird, die an einer Seitenwand des Längswerks (2) fixiert ist.

10. Maschine nach Anspruch 8, ***dadurch gekennzeichnet*, *dass*** das Längswerk (2) seitliche Öffnungen an seinen Seitenwänden für den Durchlass der flexiblen Abschnitte (18 und 19) in den Innenraum des Längswerks (2) umfasst.

## Claims

1. Haymaking machine including a frame (1) comprised of a more or less central longitudinal structure (2) intended to be connected to a tractor and of a transverse structure (3) that is fitted with several rotors (13) to move plants on the ground and in front of which are positioned protection means (17) constituted by at least one flexible portion (18, 19), the said transverse structure (3) including side parts (6 and 7) that can be unfolded into a work position and folded into a transport position, ***characterised in that*** the flexible portion (18, 19) which forms, in front of each side part (6, 7), the protection means (17) is automatically retractable by winding or sliding when the side parts (6 and 7) of the transverse structure (3) are being placed in the transport position.

2. Machine according to claim 1, ***characterised in that*** each flexible portion (18, 19) of the protection means (17) is comprised of a belt.

3. Machine according to claim 1 or 2, ***characterised in that*** each flexible portion (18, 19) extends from the longitudinal structure (2) of the frame (1) to a rigid support (20, 21) located near the outer end of the corresponding side part (6, 7) of the transverse structure (3).

4. Machine according to any of the claims 1 to 3, ***characterised in that*** each flexible portion (18, 19) is connected to a take-up spool (22, 23) fitted with an automatic winding spring on which the said flexible portion (18, 19) is wound in the transport position.

5. Machine according to claim 4, ***characterised in that*** each take-up spool (22, 23) is attached to the longitudinal structure (2).

6. Machine according to claim 4 or 5, ***characterised in that*** each flexible portion (18, 19) is completely unwound from the corresponding take-up spool (22, 23) in the work position of the side parts (6 and 7) of the transverse structure (3) so that it is taught.

7. Machine according to any of the claims 1 to 3, ***characterised in that*** each flexible portion (18, 19) is connected to a tension spring (24) that tightens it in the work position and retracts it in the transport position.

8. Machine according to claim 7, ***characterised in that*** the tension spring (24) is located in the longitudinal structure (2) of the frame (1).

9. Machine according to claim 7 or 8, ***characterised in that*** each flexible portion (18, 19) is guided on at least one roller (25, 26) attached to a side wall of the longitudinal structure (2).

10. Machine according to claim 8, ***characterised in that*** the longitudinal structure (2) includes side openings on its side walls to allow the flexible portions (18 and 19) to pass into the interior space of the said longitudinal structure (2).
